(19) Europäisches Patentamt
European Patent Office
Office européen des brevets

(11) EP 4 770 093 A1

(12) DEMANDE DE BREVET EUROPEEN

(43) Date de publication:
01.07.2026 Bulletin 2026/27

(21) Numéro de dépôt: 25221739.3

(22) Date de dépôt: 09.12.2025

(51) Classification Internationale des Brevets (IPC):
H04N 19/59 (2014.01)      G06T 3/4046 (2024.01)
H04N 19/80 (2014.01)

(52) Classification Coopérative des Brevets (CPC):
H04N 19/59; G06T 3/4046; H04N 19/80

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 24.12.2024 FR 2415236

(71) Demandeur: Fondation B Com
35510 Cesson Sevigne (FR)

(72) Inventeurs:
• CLARE, Gordon
35740 PACE (FR)
• DIENG, Fatimatou
35000 RENNES (FR)
• HENRY, Félix
35760 SAINT GREGOIRE (FR)

(74) Mandataire: Jacobacci & Partners France
32, rue de l'Arcade
75008 Paris (FR)

(54) **PROCÉDÉ ET DISPOSITIF DE DÉCODAGE DE DONNÉES REPRÉSENTATIVES D'UN CONTENU SONORE OU VISUEL, PROCÉDÉ ET DISPOSITIF DE CODAGE DE TELLES DONNÉES, ET FLUX DE DONNÉES ASSOCIÉ**

(57)    Un procédé de décodage de données représentatives d'un contenu sonore ou visuel comprend les étapes suivantes :
- décodage de premières données (B1) de manière à obtenir un signal (IDSdec) à une première résolution ;
- décodage de deuxièmes données (B2) de manière à obtenir une pluralité de poids (Wo) ;
- suréchantillonnage du signal (IDSdec) à la première résolution en un signal (IUS) à une seconde résolution supérieure à la première résolution ;
- filtrage du signal (IUS) à la seconde résolution, le filtrage comprenant au moins une convolution au moyen d'une matrice de convolution dont certains au moins des coefficients sont respectivement les poids de la pluralité de poids (Wo).
    Un procédé de décodage, des dispositifs et des flux de données associés sont également décrits.

**Fig.2**

EP 4 770 093 A1

**Description**

**Domaine technique de l'invention**

La présente invention concerne le domaine technique du codage vidéo ou audio.

Elle concerne en particulier un procédé et un dispositif de décodage de données représentatives d'un contenu sonore ou visuel, un procédé et un dispositif de codage de telles données, et un flux de données associé.

**Etat de la technique**

Il a été proposé dans l'art antérieur d'utiliser des réseaux de neurones artificiels pour améliorer la qualité de reconstruction d'images suréchantillonnées.

On pourra se référer par exemple à l'article *"Enhanced Deep Residual Networks for Single Image Super-Resolution"* de Bee Lim et al., publié à l'occasion de la conférence "Computer Vision and Pattern Recognition 2017*"*.

Ces solutions permettent le traitement de tout type d'images, mais ont en revanche un coût calculatoire relativement important. Par ailleurs, le réseau de neurones artificiels est optimisé pour le traitement d'images sous-échantillonnées au moyen d'un processus donné de sous-échantillonnage et n'est donc pas adapté pour traiter des images sous-échantillonnées au moyen d'un autre processus de sous-échantillonnage.

**Présentation de l'invention**

Dans ce contexte est proposé un procédé de décodage de données représentatives d'un contenu sonore ou visuel, comprenant les étapes suivantes :

- décodage de premières données de manière à obtenir un signal à une première résolution ;
- décodage de deuxièmes données de manière à obtenir une pluralité de poids ;
- suréchantillonnage du signal à la première résolution en un signal à une seconde résolution supérieure à la première résolution ;
- filtrage du signal à la seconde résolution, le filtrage comprenant au moins une convolution au moyen d'une matrice de convolution dont certains au moins des coefficients sont respectivement les poids de la pluralité de poids.

Le filtrage, défini de manière adaptable grâce au décodage des deuxièmes données, permet d'améliorer la qualité du signal suréchantillonné (par exemple en le faisant s'approcher d'un signal original que l'on souhaite reproduire).

Le procédé peut comprendre en outre une étape de décodage de troisièmes données indicatives d'une localisation desdits poids au sein de la matrice de convolution.

Ces troisièmes données peuvent comprendre des quatrièmes données définissant la forme d'un motif au niveau duquel sont placés lesdits poids au sein de la matrice de convolution. Ces quatrièmes données comprennent ainsi par exemple un identifiant qui identifie ladite forme parmi une pluralité de formes prédéterminées.

Certaines au moins des troisièmes données peuvent par ailleurs définir une étendue dudit motif au sein de la matrice de convolution.

Le filtrage susmentionné peut comprendre une pluralité de convolutions mises en œuvre respectivement (et successivement) au moyen d'une pluralité de matrices de convolution définies chacune au moins en partie par des poids obtenus par décodage d'une partie des deuxièmes données.

Les troisièmes données peuvent alors comprendre, pour chaque matrice de convolution de la pluralité de matrices de convolution, des données indicatives d'une localisation des poids au sein de la matrice de convolution concernée.

Les troisièmes données peuvent par ailleurs comprendre un nombre de convolutions pour lesquelles les troisièmes données comprennent des données indicatives d'une localisation des poids.

En variante, le nombre de convolutions pour lesquelles les troisièmes données comprennent des données indicatives d'une localisation des poids peut être prédéterminé.

Les convolutions pour lesquelles les troisièmes données comprennent des données indicatives d'une localisation des poids sont par exemple les premières convolutions (dans l'ordre d'application des convolutions).

Le filtrage susmentionné peut comprendre au moins une convolution mise en œuvre au moyen d'une matrice de convolution prédéterminée, ou plusieurs convolutions mises en œuvre respectivement au moyen d'une pluralité de matrices de convolution prédéterminées (dont certaines peuvent éventuellement être distinctes les unes des autres).

Ladite au moins une convolution peut être mise en œuvre en pratique par une couche d'un réseau de neurones artificiels.

Le procédé peut alors comprendre une étape de décodage de données (faisant partie des troisièmes données dans l'exemple décrit plus loin et) indiquant un nombre de couches du réseau de neurones artificiels pour lesquelles des poids sont codés parmi les deuxièmes données.

Dans certains modes de réalisation, la seconde résolution peut être le double de la première résolution dans chacune des dimensions du signal.

Lorsque le contenu sonore ou visuel est une image, la première résolution et la seconde résolution peuvent être des résolutions spatiales.

Lorsque l'image est définie par plusieurs composantes, le décodage des premières données peut être suivi d'une étape de conversion d'un premier système de représentation de couleur à un second système de représentation de couleur.

Est également proposé un procédé de codage de données représentatives d'un contenu sonore ou visuel, comprenant les étapes suivantes :

- sous-échantillonnage, en un signal à une première résolution, d'un signal à une seconde résolution supérieure à la première résolution ;
- codage du signal à la première résolution de manière à obtenir des premières données ;
- obtention d'un signal intermédiaire par décodage des premières données et suréchantillonnage à la seconde résolution ;
- détermination d'une pluralité de poids qui minimisent un critère impliquant une distance entre le signal à la seconde résolution, transformé par conversion colorimétrique ou non, et un signal produit par filtrage du signal intermédiaire en utilisant au moins une convolution au moyen d'une matrice de convolution dont certains au moins des coefficients sont respectivement les poids de la pluralité de poids ;
- codage des poids déterminés de manière à obtenir des deuxièmes données.

Ce procédé peut comprendre, pour chacune d'une pluralité de configurations des poids au sein de la matrice de convolution, une étape de détermination d'un ensemble de poids qui minimise un critère impliquant une distance entre le signal à la seconde résolution et un signal produit par filtrage du signal intermédiaire en utilisant au moins une convolution au moyen d'une matrice de convolution ayant la configuration concernée et défini par cet ensemble de poids, les poids codés étant les poids de l'ensemble de poids pour lequel le signal produit vérifie un critère prédéterminé.

Le procédé peut comprendre une étape de codage de troisièmes données indicatives de la localisation des poids au sein de la matrice de convolution dans la configuration pour laquelle le signal produit vérifie le critère prédéterminé.

Lorsque le contenu susmentionné est une séquence vidéo, les étapes de codage et de détermination d'une pluralité de poids (avec la localisation associée) peuvent être réalisées pour chacune des images de la séquence vidéo.

Pour le décodage, le dispositif de décodage recevra alors des premières données, des deuxièmes données et des troisièmes données telles que définies plus haut pour chacune des images de la séquence vidéo. Chaque image de la séquence vidéo pourra ainsi être décodée (par les étapes de décodage, de suréchantillonnage et de filtrage) conformément à ce qui a été décrit ci-dessus.

Est également proposé un dispositif de décodage de données représentatives d'un contenu sonore ou visuel, comprenant :

- une unité de décodage configurée pour décoder des premières données de manière à obtenir un signal à une première résolution et des deuxièmes données de manière à obtenir une pluralité de poids ;
- une unité de suréchantillonnage configurée pour suréchantillonner le signal à la première résolution en un signal à une seconde résolution supérieure à la première résolution ;
- une unité de filtrage configurée pour filtrer le signal à la seconde résolution, l'unité de filtrage étant configurée pour appliquer au moins une convolution au moyen d'une matrice de convolution dont certains au moins des coefficients sont respectivement les poids de la pluralité de poids.

On propose également un dispositif de codage de données représentatives d'un contenu sonore ou visuel, comprenant :

- une unité de sous-échantillonnage configurée pour sous-échantillonner, en un signal à une première résolution, un signal à une seconde résolution supérieure à la première résolution ;
- une unité de codage configurée pour coder le signal à la première résolution de manière à obtenir des premières données ;
- une unité de décodage configurée pour obtenir un signal décodé à la première résolution par décodage des premières données ;
- une unité de suréchantillonnage configurée pour suréchantillonner le signal décodé, respectivement transformé par conversion colorimétrique ou non, de manière à obtenir un signal intermédiaire à la seconde résolution ;

- une unité d'apprentissage configurée pour déterminer une pluralité de poids qui minimisent un critère impliquant une distance entre le signal à la seconde résolution, respectivement transformé par conversion colorimétrique ou non, et un signal produit par filtrage du signal intermédiaire en utilisant au moins une convolution au moyen d'une matrice de convolution dont certains au moins des coefficients sont respectivement les poids de la pluralité de poids ;

dans lequel l'unité de codage est configurée pour coder les poids déterminés de manière à obtenir des deuxièmes données.

On propose enfin un flux de données représentatives d'un contenu sonore ou visuel, comprenant des premières données représentatives d'un signal à une première résolution et des deuxièmes données représentant des poids utilisables en tant que coefficients d'une matrice de convolution utile au filtrage d'un signal à une seconde résolution obtenu par suréchantillonnage du signal à la première résolution.

Un tel flux de données peut également comprendre des troisièmes données indicatives d'une localisation desdits poids au sein de la matrice de convolution.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

## Description détaillée de l'invention

De plus, diverses autres caractéristiques de l'invention ressortent de la description annexée effectuée en référence aux dessins qui illustrent des formes, non limitatives, de réalisation de l'invention et où :

- la figure 1 représente les éléments principaux d'un dispositif de codage de données représentatives d'une image ;
- la figure 2 représente les éléments principaux d'un dispositif de décodage de données représentatives d'une image ;
- la figure 3 représente un premier exemple de matrice de convolution utilisable dans ces dispositifs ;
- la figure 4 représente un second exemple de matrice de convolution utilisable dans ces dispositifs ;
- la figure 5 représente un troisième exemple de matrice de convolution utilisable dans ces dispositifs ;
- la figure 6 représente un quatrième exemple de matrice de convolution utilisable dans ces dispositifs ; et
- la figure 7 représente un cinquième exemple de matrice de convolution utilisable dans ces dispositifs.

La présente contribution se situe dans le domaine du codage et du décodage de données représentatives d'un contenu sonore ou visuel.

Dans la description qui suit sont présentés des modes de réalisation dans lesquels ce contenu est une image. La solution proposée s'applique toutefois sans difficulté à d'autres contenus sonores ou visuels, par exemple une séquence vidéo (auquel cas la solution s'applique par exemple aux différentes images de la séquence vidéo) ou un contenu audio (auquel cas la notion de résolution spatiale utilisée dans la description qui suit est remplacée par la notion de résolution temporelle du signal sonore concerné).

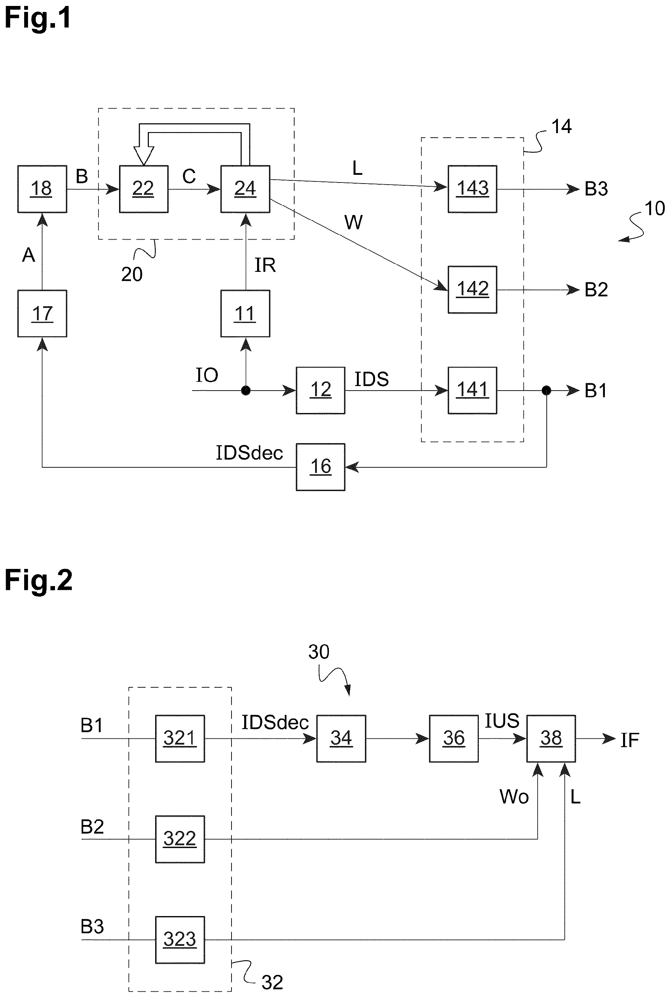

La figure 1 représente les éléments principaux d'un dispositif électronique de codage de données représentatives d'une image originale IO ayant une résolution spatiale initiale.

Ce dispositif de codage met donc en oeuvre un procédé de codage dont les étapes ressortent de la description qui suit.

La résolution spatiale initiale est par exemple une résolution de plus de 3000 pixels dans la direction horizontale (c'est-à-dire une image originale IO comprenant plus de 3000 colonnes de pixels) et/ou une résolution de plus de 1800 pixels dans la direction verticale (c'est-à-dire une image originale IO comprenant plus de 1800 lignes de pixels), telle qu'une résolution de 3840 x 2160 pixels (généralement dénommée *"format 4K"*).

Dans l'exemple décrit ici, l'image originale IO est au format YUV, c'est-à-dire que l'image originale IO comprend une composante de luminance et deux composantes de chrominance. En variante, d'autres formats avec une composante de luminance et deux composantes de chrominance peuvent être utilisés, par exemple le format YCrCb. Selon une autre variante encore, d'ailleurs mentionnée par endroits dans la suite, l'image originale IO pourrait être au format RGB.

Dans ces différents exemples, l'image originale comprend trois composantes (définissant ensemble une image en couleurs), chaque composante ayant la résolution spatiale initiale susmentionnée.

Le dispositif électronique de codage 10 comprend une première unité de conversion colorimétrique 11, une unité de sous-échantillonnage 12, une unité de codage 14, une unité de décodage 16, une seconde unité de conversion colorimétrique 17, une unité de suréchantillonnage 18 et une unité d'apprentissage 20.

Ces unités peuvent chacune être mises en œuvre en pratique du fait de l'exécution, par un processeur du dispositif électronique de codage 10, d'instructions de programmes d'ordinateur dédiées permettant d'effectuer les fonctionnalités décrites ci-dessous pour l'unité concernée, lorsque ces instructions sont exécutées par le processeur.

En variante toutefois, une ou plusieurs de ces unités pourrai(en)t être mise(s) en œuvre par un circuit intégré dédié (différent du processeur susmentionné), par exemple un circuit intégré à applications spécifique.

La première unité de conversion colorimétrique 11 est conçue pour convertir l'image originale d'un premier format (ou système) de représentation colorimétrique (ici le format YUV) à un second format de représentation colorimétrique (par exemple un format d'affichage), ici le format RGB. On note dans la suite IR l'image originale convertie ainsi obtenue. L'image originale convertie IR est donc définie à la résolution initiale.

La première unité de conversion colorimétrique 11 effectue par exemple la conversion colorimétrique en multipliant, pour chaque pixel de l'image originale IO, un vecteur formé des valeurs des différentes composantes de l'image originale IO pour ce pixel par une matrice de conversion prédéfinie, afin d'obtenir un vecteur comprenant les valeurs des différentes composantes de ce pixel dans l'image originale convertie IR. Le nombre (ici trois) de composantes dans l'image originale IO est ici égal au nombre de composantes dans l'image originale convertie IR. En variante toutefois, ces nombres pourraient être différents l'un de l'autre comme par exemple dans le cas d'une conversion du format RGB vers le format CMYK (Cyan, Magenta, Jaune, Noir, format utilisé dans le domaine technique de l'impression).

Dans certains modes de réalisation (par exemple lorsque l'image originale IO est déjà au format RGB), la première unité de conversion colorimétrique 11 peut être omise.

L'unité de sous-échantillonnage 12 est configurée pour sous-échantillonner l'image originale IO en une image IDS ayant une résolution spatiale inférieure à la résolution spatiale initiale.

Cette résolution spatiale inférieure est par exemple une résolution spatiale de moins de 3000 pixels dans la direction horizontale (c'est-à-dire que l'image sous-échantillonnée IDS comprend moins de 3000 colonnes de pixels) et/ou une résolution de moins de 1800 pixels dans la direction verticale (c'est-à-dire une image sous-échantillonnée IDS comprenant moins de 1800 lignes de pixels), telle qu'une résolution de 1920 x 1080 pixels ou une résolution de 1280 x 720 pixels.

Dans le cas où la résolution spatiale initiale est de 3840 x 2160 pixels et où la résolution spatiale inférieure est de 1920 x 1080 pixels, la résolution spatiale initiale est ainsi le double de la résolution spatiale inférieure dans la dimension horizontale de l'image et dans la dimension verticale de l'image.

L'unité de sous-échantillonnage 12 effectue le sous-échantillonnage susmentionné par exemple par filtrage de Lanczos, ou, en variante, par extraction d'une phase, ou encore par filtrage bicubique. Selon une autre variante encore, l'unité de sous-échantillonnage 12 susmentionnée peut effectuer le sous-échantillonnage susmentionné au moyen d'un réseau de neurones artificiels.

Un tel sous-échantillonnage s'applique ici séparément à chaque composante formant l'image originale IO.

L'unité de codage 14 comprend un premier module de codage 141 conçu pour coder l'image sous-échantillonnée IDS de manière à obtenir des premières données B1. Ce premier module de codage 141 peut être un codeur d'image intra de type HEVC ou VVC, ou un codeur de type JPEG. Le premier module de codage 141 peut toutefois en variante effectuer un autre type de codage avec pertes.

L'unité de décodage 16 est conçue pour effectuer un décodage inverse du codage effectué par le premier module de codage 141. Ainsi, l'unité de décodage 16 produit, par décodage des premières données B1, une image décodée IDSdec ayant la résolution inférieure susmentionnée. Du fait que le codage utilisé par le premier module de codage 141 est un codage avec pertes, l'image décodée IDSdec n'est en général pas strictement identique à l'image sous-échantillonnée IDS.

La seconde unité de conversion colorimétrique 17 est conçue pour convertir l'image décodée IDSdec du premier format (ou système) de représentation colorimétrique (ici le format YUV utilisé pour l'image originale IO, pour l'image sous-échantillonnée IDS et donc pour l'image décodée IDSdec) au second format de représentation colorimétrique (par exemple un format d'affichage), ici le format RGB. On note dans la suite A l'image décodée convertie ainsi obtenue.

La seconde unité de conversion colorimétrique 17 effectue par exemple la conversion colorimétrique en multipliant, pour chaque pixel de l'image décodée IDSdec, un vecteur formé des valeurs des différentes composantes de l'image décodée IDSdec pour ce pixel par une matrice de conversion prédéfinie, afin d'obtenir un vecteur comprenant les valeurs des différentes composantes de ce pixel dans l'image décodée convertie A. Le nombre (ici trois) de composantes dans l'image décodée IDSdec est ici égal au nombre de composantes dans l'image décodée convertie A. En variante toutefois, ces nombres pourraient être différents l'un de l'autre.

Dans certains modes de réalisation (comme par exemple dans la variante susmentionnée où l'image originale IO est au format RGB, ou dans le cas du traitement d'un signal audio), la seconde unité de conversion colorimétrique 17 peut être omise.

L'unité de suréchantillonnage 18 est configurée pour suréchantillonner l'image décodée (ici après conversion colorimétrique, soit l'image décodée convertie A) de manière à obtenir une image intermédiaire B à la résolution spatiale initiale.

Le suréchantillonnage effectué par l'unité de suréchantillonnage 18 est par exemple réalisé au moyen d'un filtrage associé au filtrage utilisé par l'unité de sous-échantillonnage 12.

Selon une première approche envisageable, l'unité de suréchantillonnage 18 peut utiliser une pluralité de filtres distincts produisant chacun une phase (ayant la résolution de l'image décodée, soit ici la résolution inférieure susmentionnée) à partir de l'image décodée (ici convertie) A, et multiplexer les différentes phases afin d'obtenir l'image intermédiaire B.

Par exemple, lorsque la résolution initiale est le double de la résolution inférieure dans les deux dimensions de l'image, l'unité de suréchantillonnage 18 utilise 4 filtres distincts produisant respectivement 4 phases à partir de l'image décodée (ici convertie) A et multiplexe ces 4 phases afin d'obtenir l'image intermédiaire B.

Selon une seconde approche envisageable, l'unité de suréchantillonnage 18 peut insérer des lignes et/ou des colonnes de zéros dans l'image décodée (ici convertie) A afin d'obtenir une image ayant la résolution initiale, puis appliquer à cette image un filtre de convolution (par exemple un filtre bilinéaire ou un filtre bicubique ou un filtre de Lanczos) afin d'obtenir l'image intermédiaire B.

Lorsque la résolution initiale est le double de la résolution inférieure dans les deux dimensions de l'image, l'unité de suréchantillonnage 18 insère dans ce cas une ligne de pixels de valeur nulle sous chaque ligne de pixels de l'image décodée (ici convertie) A et une colonne de pixels de valeur nulle après chaque colonne de pixels de l'image décodée (ici convertie), puis applique à cette image le filtre de convolution afin d'obtenir l'image intermédiaire B.

Quelle que soit l'approche utilisée, lorsque l'unité de suréchantillonnage 18 réalise le suréchantillonnage au moyen d'un filtre, il est possible dans certains modes de réalisation de modifier les paramètres du filtre au cours d'une phase d'apprentissage décrite plus loin (ce qui permet notamment, si nécessaire, d'adapter le suréchantillonnage effectué au sous-échantillonnage réalisé par l'unité de sous-échantillonnage 12).

L'unité d'apprentissage 20 comprend un module de filtrage 22 et un module d'optimisation 24.

Le module de filtrage 22 reçoit en entrée l'image intermédiaire B et est conçu pour appliquer à cette image intermédiaire B une convolution au moyen d'une matrice de convolution ou, dans certains modes de réalisation comme ceux présentés dans la suite, une pluralité de convolutions chacune réalisée au moyen d'une matrice de convolution.

Le module de filtrage produit ainsi une image C (ayant la même résolution spatiale que l'image intermédiaire B, c'est-à-dire la résolution spatiale initiale).

Le module de filtrage 22 peut dans certains modes de réalisation mettre en œuvre un réseau de neurones artificiels, chacune des convolutions susmentionnées pouvant alors être effectuée au moyen d'une couche du réseau de neurones artificiels.

Les coefficients de la matrice de convolution définissant une convolution donnée effectuée par le module de filtrage 22 sont alors respectivement les poids associés aux neurones de la couche correspondant à cette convolution donnée dans le réseau de neurones artificiels.

Chaque matrice de convolution (également dénommée *"noyau de convolution"*) possède un nombre d'éléments (ou coefficients) nettement inférieur au nombre de pixels dans l'image intermédiaire B, par exemple un nombre d'éléments inférieur à un dix-millième du nombre de pixels dans l'image intermédiaire B (c'est-à-dire dans la résolution initiale).

Le nombre d'éléments dans chaque matrice de convolution peut en pratique être inférieur à 256.

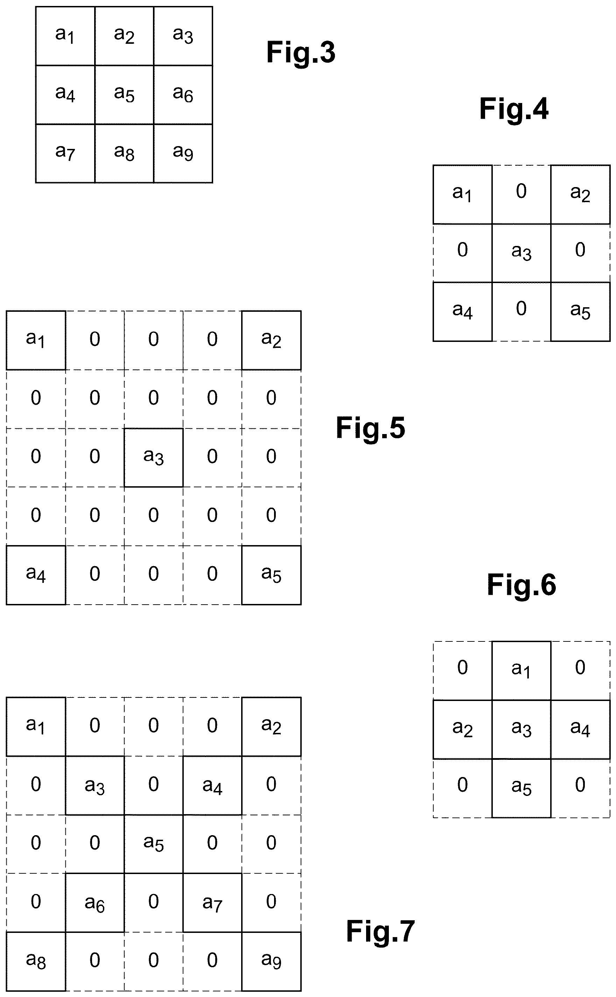

Dans les exemples décrits plus loin en référence aux figures 3 à 7, les matrices de convolution sont des matrices comportant au maximum 5 lignes et 5 colonnes (matrices 5 x 5) et comprennent donc 25 éléments (ou coefficients).

Ainsi, le module de filtrage 22 applique la convolution (ou la série de convolutions) successivement à des blocs de pixels extraits de l'image intermédiaire B (ici pour chacune des trois composantes de l'image intermédiaire B), ces blocs ayant les mêmes dimensions que la ou les matrice(s) de convolution, de manière à produire, pour chaque bloc de pixel extrait, une valeur d'un pixel (d'une composante) de l'image C.

Dans les modes de réalisation utilisant un réseau de neurones (comme déjà mentionné), chaque couche du réseau de neurones artificiels applique une convolution donnée à l'ensemble des valeurs de pixel reçues en entrée de la couche concernée (en appliquant la matrice de convolution successivement aux différents blocs de pixels reçus en entrée, ces blocs de pixels étant de mêmes dimensions que la matrice de convolution) de manière à produire en sortie de la couche concernée un ensemble de valeurs de pixel (ou valeurs latentes) de mêmes dimensions que l'image intermédiaire C ou, pour la dernière couche, l'ensemble des valeurs des pixels de l'image C.

Comme usuellement dans un réseau de neurones artificiels, les valeurs de pixel (ou valeurs latentes) produites par une couche donnée sont appliquées en entrée de la couche suivante.

Chaque couche du réseau de neurones artificiels peut appliquer, en plus de la convolution susmentionnée, au moins une autre fonction, telle qu'une fonction linéaire (ou fonction d'activation), par exemple une fonction de type ReLU (ou redresseur). Dans ce cas, la fonction d'activation est par exemple appliquée à chaque valeur de pixel produite par la convolution associée à la couche concernée et chaque valeur produite par la fonction d'activation forme une valeur de pixel (valeur latente) à appliquer en entrée de la couche suivante.

Les coefficients des matrices de convolution, c'est-à-dire dans ce cas les poids définissant le réseau de neurones artificiels, sont déterminés au cours d'une phase d'apprentissage décrite ci-après.

Le module d'optimisation 24 reçoit en entrée l'image C produite en sortie du module de filtrage 22 et l'image originale convertie IR produite par la première unité de conversion colorimétrique 11 et détermine une distance entre ces deux images, par exemple une mesure de distorsion entre ces deux images.

Le module d'optimisation 24 est configuré pour tester, pour au moins une convolution (c'est-à-dire pour au moins une couche du réseau de neurones artificiels), une pluralité de localisations prédéfinies des coefficients au sein de la matrice de convolution concernée et, à chaque fois, pour déterminer les coefficients (c'est-à-dire les poids de la couche concernée dans le réseau de neurones artificiels) qui minimisent la distance susmentionnée entre l'image C et l'image IR, ou, en variante, un coût débit-distorsion impliquant non seulement une mesure de distorsion entre l'image C et l'image IR mais aussi une mesure de la quantité d'informations nécessaire au codage de l'image IO.

Comme déjà indiqué, les paramètres optimisés afin de minimiser la distance susmentionnée (ou le coût débit-distorsion susmentionné) peuvent inclure, en plus des coefficients (ou poids) de la ou des matrice(s) de convolution, les paramètres du filtre utilisé par l'unité de suréchantillonnage 18.

Dans l'exemple décrit ici, chaque localisation prédéfinie des coefficients (ou poids) au sein de la matrice de convolution est définie par la forme et l'étendue d'un motif au niveau duquel sont placés les coefficients (ou poids) au sein de la matrice de convolution concernée (les coefficients de cette matrice de convolution situés en dehors de ce motif étant systématiquement nuls).

Dans ce contexte, le module d'optimisation 24 peut éventuellement tester en outre certaines localisations des coefficients définies chacune par superposition de plusieurs motifs, définis chacun par une forme et une étendue, comme expliqué plus bas en référence notamment à la figure 7.

La localisation susmentionnée des coefficients parmi une pluralité de localisations prédéfinies peut être testée séparément pour plusieurs convolutions utilisées (c'est-à-dire pour plusieurs couches du réseau de neurones artificiels), le nombre de ces convolutions pouvant être variable.

On définit par exemple un ensemble de configurations envisageables comme suit :

- un premier groupe de configurations défini en considérant toutes les localisations envisagées pour la première convolution envisagée (c'est-à-dire pour la première couche du réseau de neurones artificiels), les convolutions subséquentes (c'est-à-dire les couches subséquentes du réseau de neurones artificiels) étant prédéterminées, c'est-à-dire effectuées au moyen de matrices de convolution prédéterminées ;
- un second groupe de configurations défini en considérant toutes les localisations envisagées pour la première convolution envisagée (c'est-à-dire pour la première couche du réseau de neurones artificiels) et toutes les localisations envisagées pour la seconde convolution envisagée (c'est-à-dire pour la seconde couche du réseau de neurones artificiels) selon toutes les combinaison possibles, les convolutions subséquentes (c'est-à-dire les couches subséquentes du réseau de neurones artificiels) étant prédéterminées, c'est-à-dire effectuées au moyen de matrices de convolution prédéterminées ;
- un troisième groupe de configurations défini en considérant toutes les localisations envisagées pour la première convolution envisagée (c'est-à-dire pour la première couche du réseau de neurones artificiels), toutes les localisations envisagées pour la seconde convolution envisagée (c'est-à-dire pour la seconde couche du réseau de neurones artificiels) et toutes les localisations envisagées pour la troisième convolution envisagée (c'est-à-dire pour la troisième couche du réseau de neurones artificiels) selon toutes les combinaison possibles, les convolutions subséquentes (c'est-à-dire les couches subséquentes du réseau de neurones artificiels) étant prédéterminées, c'est-à-dire effectuées au moyen de matrices de convolution prédéterminées ;

et ainsi de suite jusqu'à aboutir à un groupe de configurations dans lesquelles toutes les localisations envisagées sont considérées pour toutes les convolutions (c'est-à-dire pour toutes les couches du réseau de neurones artificiels) dans toutes les combinaisons possibles, sans convolution prédéterminée.

Selon une variante envisageable, le nombre de convolutions (c'est-à-dire le nombre de couches du réseau de neurones artificiels) pour lesquelles la localisation des coefficients est variable parmi plusieurs localisations possibles est prédéterminé, ce qui permet de réduire le nombre de configurations à tester.

Au cours d'une phase d'apprentissage, pour chacune des configurations envisageables définies ci-dessus, le module d'optimisation 22 détermine (par exemple par une méthode des moindres carrés ou par descente de gradient) les coefficients (ou poids) de la (ou des) matrices de convolution, situés aux emplacements spécifiés par la configuration concernée, et éventuellement les paramètres du filtre de l'unité de suréchantillonnage 18, qui minimisent le critère utilisé (par exemple comme déjà indiqué la mesure de distorsion entre l'image IR et l'image C, ou, en variante, un coût débit-distorsion) et mémorise, en association avec la configuration courante, la valeur minimum du critère utilisé ainsi obtenue pour cette configuration.

Lorsque toutes les configurations ont été testées, le module d'optimisation 22 sélectionne la configuration pour laquelle la valeur mémorisée du critère utilisé est optimale (ici minimale) ; il s'agit par exemple de la configuration pour laquelle la mesure de distorsion mémorisée est minimale.

Selon une variante envisageable, au lieu d'utiliser des convolutions prédéterminées pour les dernières couches comme proposé ci-dessous, on peut utiliser des convolutions dont la localisation des coefficients est prédéterminée (par exemple étendue sur toute la matrice de convolution), mais dont la valeur des coefficients est déterminée lors de la phase d'apprentissage.

Le module d'optimisation 22 produit ainsi, pour au moins une convolution (c'est-à-dire une couche du réseau de neurones artificiels) pour laquelle plusieurs localisations des coefficients ont été testées, un ensemble de coefficients (ou poids) et une localisation de ceux-ci (correspondant à la configuration sélectionnée) qui fait partie de la pluralité de localisation testées.

Précisément, dans l'exemple décrit ici, le module d'optimisation 22 produit en sortie :

- le nombre NNL de convolutions (c'est-à-dire de couches de réseaux de neurones artificiels) définies par un motif et des poids (comme expliqué ci-dessous) dans la configuration sélectionnée, les convolutions subséquentes étant prédéterminées ;
- pour chacune de ces NNL convolutions (c'est-à-dire pour chacune des NNL premières couches du réseau de neurones artificiels), la localisation des poids (ou coefficients) au sein de la matrice de convolution parmi la pluralité de localisations testées et les poids (ou coefficients) W à utiliser aux emplacements définis (au sein de la matrice de convolution) par cette localisation.

Dans la variante mentionnée ci-dessus où seule la localisation relative aux convolutions subséquentes est prédéterminée (mais pas la valeur des poids ou coefficients définissant ces convolutions subséquentes), le module d'optimisation 22 produit également en sortie les poids à utiliser (aux emplacements prédéterminés) pour les convolutions subséquentes.

Dans certains modes de réalisation, le module d'optimisation 24 peut également produire en sortie les paramètres optimisés du filtre utilisé par l'unité de suréchantillonnage 18.

L'unité de codage 14 comprend un second module de codage 142 conçu pour coder (pour chaque convolution pour laquelle de tels poids sont déterminés par le processus d'apprentissage décrit ci-dessus, soit ici pour NNL convolutions) les poids W de manière à obtenir des deuxièmes données B2.

Le second module de codage 142 peut effectuer un codage avec pertes ou un codage sans perte.

Selon une première possibilité de réalisation, le second module de codage 142 quantifie les poids W avec un pas de quantification déterminé, puis applique un algorithme de codage entropique connu, tel que le codage arithmétique ou le codage de Huffman.

Selon une seconde possibilité de réalisation, le seconde module de codage 142 code les poids W (qui définissent comme indiqué ci-dessus des couches d'un réseau de neurones artificiels) conformément à la norme MPEG-7 partie 17 (utilisée pour coder les paramètres d'un réseau de neurones artificiels).

L'unité de codage 14 comprend également un troisième module de codage 143 conçu pour coder (pour chaque convolution pour laquelle des poids sont définis, soit ici pour NNL convolutions) la localisation L des poids W au sein de la matrice de convolution concernée de manière à former des troisièmes données B3. Le volume des troisièmes données B3 étant relativement faible, le troisième module de codage 143 utilise ici une technique de codage sans perte, par exemple en juxtaposant les données indiquées ci-dessous (nombre NNL, drapeau ou identifiant(s) et/ou paramètre(s) pour chacune des NNL convolutions).

Dans l'exemple décrit ici, les troisièmes données B3 définissent au moins un motif au niveau duquel sont placés les poids W au sein de la matrice de convolution concernée.

Pour ce faire, ces troisièmes données B3 comprennent :

- des quatrièmes données définissant la forme du motif susmentionnée, et qui peuvent par exemple comprendre un identifiant qui identifie cette forme parmi une pluralité de formes prédéterminées ;
- optionnellement, des données définissant une étendue de ce motif.

Selon un mode de réalisation envisageable, les troisième données B3 comprennent :

- le nombre NNL de convolutions (soit ici le nombre de couches du réseau de neurones artificiels) pour lesquelles sont disponibles des informations de localisation L telles que celles qui suivent ;
- pour chacune de ces NNL convolutions (c'est-à-dire ici pour chacune de ces NNL couches du réseau de neurones artificiels), un drapeau use_default_loc indiquant si un motif de convolution par défaut (par exemple une matrice de convolution de dimensions 3x3) est utilisé (cas où use_default_loc vaut 1) ;
- un identifiant loc_type (faisant partie des quatrièmes données susmentionnées) identifiant une forme de motif parmi une pluralité de formes prédéterminées et/ou un paramètre loc_scale définissant l'étendue du motif lorsque, pour une convolution (c'est-à-dire pour une couche du réseau de neurones artificiels), le drapeau use_default_loc vaut 0 (le motif défini par l'identifiant loc_type et le paramètre loc_scale indiquant alors comme déjà mentionné les positions des poids W codés par certaines des secondes données B2 au sein de la matrice de convolution concernée).

Comme indiqué ci-dessus, les NNL couches du réseau de neurones artificiels concernées sont ici les NNL premières couches de ce réseau de neurones artificiels, les informations de localisation pouvant ainsi être codées de la première couche à la couche d'ordre NNL.

Dans la variante mentionnée ci-dessus où le nombre de convolutions (c'est-à-dire ici le nombre de couches du réseau de neurones artificiels) pour lesquelles la localisation des coefficients est variable est prédéterminé (les couches subséquentes utilisant une localisation prédéfinie des coefficients dans chaque matrice de convolution concernée), le nombre NNL peut être omis des troisièmes données B3.

Certains exemples de formes de motif prédéterminées utilisables sont décrits plus loin en référence aux figures 4 et 6.

L'unité de codage 14 peut également être configurée pour coder les paramètres optimisés du filtre utilisé par l'unité de suréchantillonnage 18.

Les données codées B1, B2, B3 peuvent être mémorisées au sein du dispositif de codage 10 pour utilisation ultérieure, ou transmise à un dispositif de décodage (par exemple tel que celui décrit ci-dessous en référence à la figure 2) au moyen d'une unité de communication (non représentée) du dispositif de codage 10.

Lorsque les données codées B1, B2, B3 (représentatives de l'image originale IO) sont ainsi transmises, le flux de données transmises comprend alors :

- les premières données B1 représentatives de l'image à la résolution inférieure (image IDS) ;
- les deuxièmes données B2 représentant les poids W utilisables en tant que coefficients d'une matrice de convolution utile (comme expliqué dans la suite) au filtrage d'une image à la résolution initiale obtenue par suréchantillonnage de l'image IDS à la résolution inférieure ;
- les troisièmes données B3 indicatives d'une localisation de ces poids au sein de la matrice de convolution.

Ce flux de données peut éventuellement comprendre en outre les paramètres optimisés d'un filtre utilisable pour le suréchantillonnage précité (qui correspond au filtre utilisé par l'unité de suréchantillonnage 18).

Dans le cas déjà mentionné où le contenu sonore ou visuel est une séquence vidéo, on peut prévoir que le processus d'apprentissage décrit ci-dessus s'applique pour chaque image de la séquence vidéo, ce qui permet ainsi d'obtenir des informations de localisation L et des poids W (ainsi qu'éventuellement des paramètres optimisés d'un filtre de suréchantillonnage) pour chacun des images de la séquence vidéo.

Dans ce cas, le flux de données représentatif de la séquence vidéo comprend, pour chaque image de la séquence vidéo :

- des premières données représentatives de l'image concernée à la résolution inférieure ;
- des deuxièmes données représentant des poids utilisables en tant que coefficients d'une matrice de convolution utile au filtrage d'une image à la résolution initiale obtenue par suréchantillonnage de l'image concernée à la résolution inférieure ;
- des troisièmes données indicatives d'une localisation de ces poids au sein de la matrice de convolution ;
- éventuellement, des paramètres optimisés d'un filtre utilisable pour ce suréchantillonnage.

La figure 2 représente les éléments principaux d'un dispositif électronique de décodage 30 de telles données représentatives d'une image.

Ce dispositif de décodage met donc en œuvre un procédé de décodage dont les étapes ressortent de la description qui suit.

Le dispositif électronique de décodage 30 comprend une unité de décodage 32, une unité de conversion colorimétrique 34, une unité de suréchantillonnage 36 et une unité de filtrage 38.

Ces unités peuvent chacune être mises en oeuvre en pratique du fait de l'exécution, par un processeur du dispositif électronique de décodage 30, d'instructions de programmes d'ordinateur dédiées permettant d'effectuer les fonctionnalités décrites ci-dessous pour l'unité concernée, lorsque ces instructions sont exécutées par le processeur.

En variante toutefois, une ou plusieurs de ces unités pourrai(en)t être mise(s) en œuvre par un circuit intégré dédié (différent du processeur susmentionné), par exemple un circuit intégré à applications spécifique.

Les données B1, B2, B3 traitées par le dispositif électronique de décodage 30 comme expliqué dans la suite sont par exemple reçues par une unité de réception (non représentée) du dispositif électronique de décodage 30.

En variante, le dispositif électronique de codage 10 décrit en référence à la figure 1 et le dispositif électronique de décodage 30 peuvent avoir accès à une même mémoire (non représentée), notamment lorsque le dispositif de codage 10 et le dispositif de décodage 30 sont le même dispositif électronique, et les données B1, B2, B3 (mémorisées dans cette mémoire par le dispositif de codage 10 comme décrit ci-dessus) peuvent être lues dans cette mémoire.

L'unité de décodage 32 comprend un premier module de décodage 321 conçu pour décoder les premières données B1 de manière à obtenir une image décodée IDSdec à une première résolution (ici la résolution inférieure mentionnée plus haut).

Le premier module de décodage 321 est du même type que l'unité de décodage 16 utilisée par le dispositif de codage 10 et on peut donc se référer aux explications données ci-dessus à propos de l'unité de décodage 16.

L'unité de décodage 32 comprend un second module de décodage 322 conçu pour décoder les deuxièmes données B2 de manière à obtenir une pluralité de poids Wo. On note ici Wo les poids décodés ainsi obtenus ; en effet, du fait que la technique de codage utilisée pour coder les deuxièmes données B2 peut être une technique de codage avec pertes, les poids Wo décodés peuvent ne pas être strictement identiques aux poids W obtenus dans le cadre du procédé de codage décrit plus haut en référence à la figure 1.

L'unité de décodage 32 comprend un troisième module de décodage 323 conçu pour décoder les troisièmes données B3 indicatives, pour chaque matrice de convolution pour laquelle des poids sont codés par les deuxièmes données B2, d'une localisation L des poids au sein de la matrice de convolution concernée.

Comme mentionné plus haut, ces troisièmes données B3 comprennent ici :

- un nombre NNL de convolutions (c'est-à-dire comme expliqué ci-après de couches d'un réseau de neurones artificiels) pour lesquelles des poids sont codés parmi les deuxièmes données B2 ;
- pour chacune de ces NNL convolutions, un drapeau use_default_loc indiquant si un motif de convolution par défaut est utilisé (au sein d'une matrice de convolution) pour la convolution concernée ;
- pour chaque convolution pour laquelle le motif de convolution par défaut n'est pas utilisé, un identifiant loc_type (quatrièmes données) identifiant une forme de motif de convolution (au sein de la matrice de convolution concernée) parmi une pluralité de formes prédéterminées et/ou un paramètre loc_scale définissant l'étendue du motif de convolution.

Pour chaque convolution pour laquelle des poids sont codés parmi les deuxièmes données B2, les troisièmes données B3 définissent ainsi un motif représentant, au sein de la matrice de convolution concernée, les emplacements où les poids décodés seront utilisés en tant que coefficients de la matrice de convolution (les autres coefficients de la matrice de convolution étant nuls).

L'unité de conversion colorimétrique 34 est conçue pour convertir l'image décodée IDSdec d'un premier format de représentation colorimétrique (ici le format YUV utilisé pour l'image originale IO et pour l'image décodée IDSdec) à un second format de représentation colorimétrique (par exemple un format d'affichage), ici le format RGB. Cette unité de conversion colorimétrique 34 est ici du même type que la seconde unité de conversion colorimétrique 17.

L'unité de conversion colorimétrique 34 effectue par exemple la conversion colorimétrique en multipliant, pour chaque pixel de l'image décodée IDSdec, un vecteur formé des valeurs des différentes composantes de l'image décodée IDSdec pour ce pixel par une matrice de conversion prédéfinie, afin d'obtenir un vecteur comprenant les valeurs des différentes composantes de ce pixel dans l'image décodée convertie. Le nombre (ici trois) de composantes dans l'image décodée IDSdec est ici égal au nombre de composantes dans l'image décodée convertie. En variante toutefois, ces nombres pourraient être différents l'un de l'autre.

Dans certains modes de réalisation (comme par exemple lorsque l'image décodée IDSdec est au format RGB, ou dans le cas du traitement d'un signal audio), l'unité de conversion colorimétrique 34 peut être omise.

L'unité de suréchantillonnage 36 est configurée pour suréchantillonner l'image décodée IDSdec (ici convertie par l'unité de conversion colorimétrique 34), qui est à la première résolution, en une image IUS à une seconde résolution supérieure à la première résolution (cette seconde résolution étant ici la résolution initiale, c'est-à-dire la résolution de l'image originale IO).

Le suréchantillonnage effectué par l'unité de suréchantillonnage 36 est par exemple réalisé au moyen d'un filtrage associé au filtrage utilisé par l'unité de sous-échantillonnage 12. Dans les modes de réalisation où des paramètres optimisés relatifs au suréchantillonnage sont transmis comme indiqué plus haut, ce filtrage peut être défini par ces paramètres. Dans les autre cas, l'unité de suréchantillonnage 36 utilise par exemple un filtrage prédéfini.

Selon une première approche envisageable, l'unité de suréchantillonnage 36 peut utiliser une pluralité de filtres distincts produisant chacun une phase (ayant la résolution de l'image décodée IDSdec, soit ici la première résolution) à partir de l'image décodée IDSdec (ici convertie par l'unité de conversion colorimétrique 34), et multiplexer les différentes phases afin d'obtenir l'image IUS à la seconde résolution.

Par exemple, lorsque la seconde résolution est le double de la première résolution dans les deux dimensions de l'image, l'unité de suréchantillonnage 36 utilise 4 filtres distincts produisant respectivement 4 phases à partir de l'image décodée IDSdec (ici convertie par l'unité de conversion colorimétrique 34) et multiplexe ces 4 phases afin d'obtenir l'image IUS à la seconde résolution.

Selon une seconde approche envisageable, l'unité de suréchantillonnage 36 peut insérer des lignes et/ou des colonnes de zéros dans l'image décodée IDSdec (ici convertie par l'unité de conversion colorimétrique 34), puis appliquer à cette image un filtre de convolution (par exemple un filtre bilinéaire ou un filtre bicubique ou un filtre de Lanczos) afin d'obtenir l'image IUS à la seconde résolution.

Lorsque la seconde résolution est le double de la première résolution dans les deux dimensions de l'image, l'unité de suréchantillonnage 36 insère une ligne de pixels de valeur nulle sous chaque ligne de pixels de l'image décodée IDSdec (ici convertie par l'unité de conversion colorimétrique 34) et une colonne de pixels de valeur nulle après chaque colonne de pixels de l'image décodée IDSdec (ici convertie par l'unité de conversion colorimétrique 34), puis applique à cette image un filtre de convolution.

L'unité de filtrage 38 est configurée pour appliquer un filtrage à l'image IUS à la seconde résolution afin d'obtenir une image finale IF, ce filtrage comprenant une convolution ou plusieurs convolutions successives au moyen respectivement d'une ou plusieurs matrice(s) de convolution définie(s) par les deuxièmes données B2 et les troisièmes données B3.

Dans l'exemple décrit ici, l'unité de filtrage 38 met en œuvre un réseau de neurones artificiels dont les couches successives mettent respectivement en œuvre les convolutions utilisées pour effectuer le filtrage appliqué par l'unité de filtrage 38 comme mentionné ci-dessus.

L'unité de filtrage 38 est du même type que le module de filtrage 22 décrit plus haut. Toutefois, les coefficients des matrices de convolution utilisées dans l'unité de filtrage 38 sont déterminés en fonction des données codées B2, B3 reçues par le dispositif de décodage (alors que les coefficients des matrices de convolution utilisées dans le module de filtrage 22 varient au cours de la phase d'apprentissage décrite plus haut).

L'unité de filtrage 38 utilise les poids Wo (obtenus à partir des données codées B2) et les informations de localisation L des poids (obtenues à partir des données codées B3) pour configurer les différentes convolutions utilisées (c'est-à-dire pour définir, pour certaines au moins des convolutions utilisées, la matrice de convolution associée, autrement dit ici les poids de la couche du réseau de neurones artificiels mettant en œuvre cette convolution) : pour chaque convolution définie par certaines des données B2, B3, l'unité de filtrage 38 détermine, sur la base des informations de localisation L relatives à cette convolution, des emplacements au sein de la matrice de convolution définissant cette convolution, et met les coefficients de la matrice de convolution situés à ces emplacements (pris dans un ordre prédéfini) aux valeurs respectives des poids Wo relatifs à cette convolution (ou, autrement dit, utilise, en tant que coefficients de la matrice de convolution situés à ces emplacements, respectivement et dans un ordre prédéfini, les poids Wo relatifs à cette convolution).

Dans l'exemple décrit ici, l'unité de filtrage 38 effectue pour ce faire les étapes suivantes :

- pour chacune des NNL premières convolutions (c'est-à-dire ici pour chacune des premières couches du réseau de neurones artificiels), lecture du drapeau use_default_loc indiquant si un motif de convolution par défaut est utilisé (au sein d'une matrice de convolution) pour la convolution concernée ;
- si le drapeau use_default_loc indique qu'un motif de convolution par défaut est utilisé, configuration de la matrice de convolution concernée (c'est-à-dire ici de la couche de réseau de neurones artificiels concernée) en utilisant, pour les coefficients situés aux emplacements du motif de convolution par défaut, respectivement les poids Wo obtenus à partir des données B1 pour cette convolution (les coefficients situés en dehors des emplacements du motif de convolution par défaut étant mis à zéro) ;
- si le drapeau use_default_loc indique que le motif de convolution par défaut n'est pas utilisé, détermination des emplacements visés (au sein de la matrice de convolution concernée) sur la base de la forme de motif de convolution identifiée par l'identifiant loc_type et de l'étendue de ce motif définie par le paramètre loc_scale, et configuration de la matrice de convolution concernée (c'est-à-dire ici de la couche de réseau de neurones artificiels concernée) en utilisant, pour les coefficients situés aux emplacements visés, respectivement les poids Wo obtenus à partir des données B1 pour cette convolution (les coefficients situés en dehors des emplacements visés étant mis à zéro) ;
- pour chacune des éventuelles convolutions (ou couches de réseau de neurones artificiels) postérieures aux NNL premières convolutions (couches), utilisation d'une matrice de convolution prédéterminée (des matrices de convolution prédéterminées distinctes pouvant éventuellement être utilisées pour ces différentes convolutions postérieures), c'est-à-dire configuration de la couche de réseau de neurones artificiels concernée en utilisant cette matrice de convolution prédéterminée.

Pour déterminer les emplacements visés sur la base de la forme de motif et de l'étendue du motif, l'unité de filtrage 38 applique par exemple une homothétie aux emplacements définis par la forme de motif, homothétie centrée sur le centre de la matrice (ou noyau) de convolution et de rapport égal à l'étendue du motif.

Par ailleurs, dans certains modes de réalisation, plusieurs paires d'identifiant loc_type et de paramètre loc_scale peuvent être associées à une même convolution : un emplacement est alors un emplacement visé dès lors qu'il est présent dans l'un au moins des motifs définis par l'une des paires identifiant loc_type - paramètre loc_scale associé à cette convolution.

Les figures 4 à 7 donnent des exemples de définition d'emplacements visés dans une matrice de convolution sur la base d'au moins une paire identifiant loc_type - paramètre loc_scale.

Grâce au traitement de l'image IUS à la seconde résolution par un filtrage (effectué par l'unité de filtrage 38) adapté à cette image (les coefficients, ou poids, des matrices de convolution et leurs emplacements tels que codés dans les données B2, B4 étant spécifiquement associés à cette image), l'image finale IF est plus proche de l'image originale IO que l'image IUS.

L'image IF peut alors par exemple être affichée sur un dispositif d'affichage (par exemple à la seconde résolution).

Les figures 3 à 7 présentent des exemples de matrice (ou noyau) de convolution utilisable au sein du module de filtrage 22 et de l'unité de filtrage 38.

Dans tous ces exemples, on note ci-dessous x(i,j) la valeur d'un pixel en ligne i et colonne j dans l'image (ou plus généralement dans l'ensemble de valeurs) à laquelle (auquel) est appliquée la convolution définie par cette matrice de convolution, et on note y(i,j) la valeur du pixel en ligne i et colonne j dans l'image (ou plus généralement dans l'ensemble de valeurs) obtenue par application de la convolution.

La figure 3 représente un premier exemple de matrice de convolution.

Dans l'exemple décrit ici, la localisation des coefficients dans cette matrice de convolution de la figure 3 est définie par le motif par défaut ; il s'agit donc de la matrice de convolution utilisée lorsque le drapeau use_default_loc vaut 1 pour une convolution donnée.

Le traitement effectué par cette convolution s'écrit :

$$y(i,j) = a1.x(i-1,j-1) + a2.x(i-1,j) + a3.x(i-1,j+1) + a4.x(i,j-1) + a5.x(i,j) + a6.x(i,j+1) + a7.x(i+1,j-1) + a8.x(i+1,j) + a9.x(i+1,j+1).$$

On utilise dans la suite à titre d'exemple deux formes prédéfinies de motif :

- un motif en X, dont la forme est ici définie par un identifiant ID1 ;
- un motif en croix, dont la forme est ici définie par un identifiant ID2.

D'autres formes prédéfinies de motif peuvent bien entendu être utilisées en pratique.

Pour les exemples de matrice convolution donnés dans la suite en référence aux figures 4 à 7, le drapeau use_default_loc vaut 0 dans l'exemple décrit (puisque, dans ces exemples, les poids utilisés ne sont pas positionnés dans la matrice de convolution selon le motif par défaut utilisé pour la figure 3).

La figure 4 représente un second exemple de matrice de convolution.

Dans l'exemple décrit ici, la localisation des coefficients dans cette matrice de convolution est définie par l'identifiant ID1 (associé ici à la forme de motif en X) et par un paramètre d'étendue égal à 1 (signifiant que le motif défini par l'identifiant ID1 est utilisé tel quel ou autrement dit, par application d'une homothétie de rapport 1).

Le traitement effectué par cette convolution s'écrit :

$$y(i,j) = a1.x(i-1,j-1) + a2.x(i-1,j+1) + a3.x(i,j) + a4.x(i+1,j-1) + a5.x(i+1,j+1).$$

La figure 5 représente un troisième exemple de matrice de convolution.

Dans l'exemple décrit ici, la localisation des coefficients dans cette matrice de convolution est définie par l'identifiant ID1 (associé ici à la forme de motif en X) et par un paramètre d'étendue égal à 2 (signifiant que le motif défini par l'identifiant ID1 est utilisé transformé par application d'une homothétie centrée sur le coefficient central, ici a3, et de rapport 2).

Le traitement effectué par cette convolution s'écrit :

$$y(i,j) = a1.x(i-2,j-2) + a2.x(i-2,j+2) + a3.x(i,j) + a4.x(i+2,j-2) + a5.x(i+2,j+2).$$

La figure 6 représente un quatrième exemple de matrice de convolution.

Dans l'exemple décrit ici, la localisation des coefficients dans cette matrice de convolution est définie par l'identifiant ID2 (associé ici à la forme de motif en croix) et par un paramètre d'étendue égal à 1 (signifiant que le motif défini par l'identifiant ID2 est utilisé tel quel ou autrement dit, par application d'une homothétie de rapport 1).

Le traitement effectué par cette convolution s'écrit :

$$y(i,j) = a1.x(i-1,j) + a2.x(i,j-1) + a3.x(i,j) + a4.x(i,j+1) + a5.x(i+1,j).$$

La figure 7 représente un cinquième exemple de matrice de convolution.

Dans l'exemple décrit ici, la localisation des coefficients dans cette matrice de convolution est définie par deux paires identifiant - paramètre (et donc par superposition d'un premier motif et d'un second motif) :

- l'identifiant ID1 (associé ici à la forme de motif en X) et un paramètre d'étendue égal à 1, signifiant que le premier motif est le motif défini par l'identifiant ID1 utilisé tel quel ;
- l'identifiant ID1 (associé ici à la forme de motif en X) et un paramètre d'étendue égal à 2, signifiant que le second motif défini est le motif défini par l'identifiant ID1 transformé par application d'une homothétie centrée sur le coefficient central, ici a5, et de rapport 2.

Le traitement effectué par cette convolution s'écrit :

$$y(i,j) = a1.x(i - 2, j - 2) + a2.x(i - 2, j + 2) + a3.x(i -1, j -1) + a4.x(i -1, j + 1) + a5.x(i,j) + a6.x(i + 1, j - 1) + a7.x(i + 1, j + 1) + a8.x(i + 2, j - 2) + a9.x(i + 2, j + 2).$$

Comme cela ressort des exemples donnés ci-dessus, seule la localisation des coefficients est définie par les informations de localisation (codées par les données B3). Les valeurs des coefficients (notées ak ci-dessus, avec k compris entre 1 et 9) sont quant à elles données par les poids W, Wo (codés par les données B2).

Comme déjà indiqué, les poids Wo (notés ci-dessus a1, a2, *etc*.) sont affectés aux coefficients définis par les informations de localisation L selon un ordre prédéfini, par exemple par indice de ligne (noté i ci-dessus) croissant et, dans chaque ligne, par indice de colonne (noté j ci-dessus) croissant, comme c'est le cas dans les exemples des figures 3 à 7.

**Revendications**

1. Procédé de décodage de données représentatives d'un contenu sonore ou visuel, comprenant les étapes suivantes :

   - décodage de premières données (B1) de manière à obtenir un signal (IDSdec) à une première résolution ;
   - décodage de deuxièmes données (B2) de manière à obtenir une pluralité de poids (Wo) ;
   - suréchantillonnage du signal (IDSdec) à la première résolution en un signal (IUS) à une seconde résolution supérieure à la première résolution ;
   - filtrage du signal (IUS) à la seconde résolution, le filtrage comprenant au moins une convolution au moyen d'une matrice de convolution dont certains au moins des coefficients sont respectivement les poids de la pluralité de poids (Wo).

2. Procédé selon la revendication 1, comprenant une étape de décodage de troisièmes données (B3) indicatives d'une localisation (L) desdits poids au sein de la matrice de convolution.

3. Procédé selon la revendication 2, dans lequel les troisièmes données (B3) comprennent des quatrièmes données définissant la forme d'un motif au niveau duquel sont placés lesdits poids au sein de la matrice de convolution.

4. Procédé selon la revendication 3, dans lequel les quatrièmes données comprennent un identifiant qui identifie ladite forme parmi une pluralité de formes prédéterminées.

5. Procédé selon la revendication 3 ou 4, dans lequel certaines au moins des troisièmes données définissent une étendue dudit motif au sein de la matrice de convolution.

6. Procédé selon l'une quelconque des revendications 1 à 5, dans lequel ledit filtrage comprend une pluralité de convolutions mises en oeuvre respectivement au moyen d'une pluralité de matrices de convolution définies chacune au moins en partie par des poids obtenus par décodage d'une partie des deuxièmes données.

7. Procédé selon la revendication 6 prise dans la dépendance de l'une quelconque des revendications 2 à 5, dans lequel les troisièmes données comprennent, pour chaque matrice de convolution de la pluralité de matrices de convolution, des données indicatives d'une localisation des poids au sein de la matrice de convolution concernée.

8. Procédé selon la revendication 6 prise dans la dépendance de l'une quelconque des revendications 2 à 5, dans lequel les troisièmes données comprennent un nombre de convolutions pour lesquelles les troisièmes données comprennent des données indicatives d'une localisation des poids.

9. Procédé selon la revendication 6 prise dans la dépendance de l'une quelconque des revendications 2 à 5, dans lequel le nombre de convolutions pour lesquelles les troisièmes données comprennent des données indicatives d'une localisation des poids est prédéterminé.

10. Procédé selon la revendication 8 ou 9, dans lequel les convolutions pour lesquelles les troisièmes données comprennent des données indicatives d'une localisation des poids sont les premières convolutions.

11. Procédé selon l'une quelconque des revendications 1 à 10, dans lequel ledit filtrage comprend au moins une convolution mise en œuvre au moyen d'une matrice de convolution prédéterminée.

12. Procédé selon l'une quelconque des revendications 1 à 11, dans lequel ladite au moins une convolution est mise en oeuvre par une couche d'un réseau de neurones artificiels.

13. Procédé selon l'une quelconque des revendications 1 à 12, comprenant une étape de décodage de données indiquant un nombre de couches du réseau de neurones artificiels pour lesquelles des poids sont codés parmi les deuxièmes données.

14. Procédé selon l'une quelconque des revendications 1 à 13, dans lequel la seconde résolution est le double de la première résolution dans chacune des dimensions du signal.

15. Procédé selon l'une quelconque des revendications 1 à 14, dans lequel le contenu sonore ou visuel est une image, et dans lequel la première résolution et la seconde résolution sont des résolutions spatiales.

16. Procédé selon la revendication 15, dans lequel l'image est définie par plusieurs composantes, et dans lequel le décodage des premières données est suivi d'une étape de conversion d'un premier système de représentation de couleur à un second système de représentation de couleur.

17. Procédé de codage de données représentatives d'un contenu sonore ou visuel, comprenant les étapes suivantes :

- sous-échantillonnage, en un signal (IDS) à une première résolution, d'un signal (IO) à une seconde résolution supérieure à la première résolution ;
- codage du signal (IDS) à la première résolution de manière à obtenir des premières données (B1) ;
- obtention d'un signal intermédiaire (B) par décodage des premières données (B1) et suréchantillonnage à la seconde résolution ;
- détermination d'une pluralité de poids (W) qui minimisent un critère impliquant une distance entre le signal à la seconde résolution (IO), transformé par conversion colorimétrique ou non, et un signal (C) produit par filtrage du signal intermédiaire (B) en utilisant au moins une convolution au moyen d'une matrice de convolution dont certains au moins des coefficients sont respectivement les poids de la pluralité de poids (W) ;
- codage des poids déterminés (W) de manière à obtenir des deuxièmes données (B2).

18. Procédé de codage selon la revendication 17, comprenant, pour chacune d'une pluralité de configurations des poids au sein de la matrice de convolution, une étape de détermination d'un ensemble de poids qui minimise un critère impliquant une distance entre le signal à la seconde résolution (IO) et un signal produit par filtrage du signal intermédiaire (B) en utilisant au moins une convolution au moyen d'une matrice de convolution ayant la configuration concernée et défini par cet ensemble de poids, les poids codés étant les poids de l'ensemble de poids pour lequel le signal produit vérifie un critère prédéterminé.

19. Procédé de codage selon la revendication 18, comprenant une étape de codage de troisièmes données (B3) indicatives de la localisation (L) des poids au sein de la matrice de convolution dans la configuration pour laquelle le signal produit vérifie le critère prédéterminé.

20. Dispositif de décodage (30) de données représentatives d'un contenu sonore ou visuel, comprenant :

- une unité de décodage (32) configurée pour décoder des premières données (B1) de manière à obtenir un signal (IDSdec) à une première résolution et des deuxièmes données (B2) de manière à obtenir une pluralité de poids (Wo) ;
- une unité de suréchantillonnage (36) configurée pour suréchantillonner le signal (IDSdec) à la première résolution en un signal (IUS) à une seconde résolution supérieure à la première résolution ;
- une unité de filtrage (38) configurée pour filtrer le signal (IUS) à la seconde résolution, l'unité de filtrage (38) étant configurée pour appliquer au moins une convolution au moyen d'une matrice de convolution dont certains au moins des coefficients sont respectivement les poids de la pluralité de poids (Wo).

21. Dispositif de codage (10) de données représentatives d'un contenu sonore ou visuel, comprenant :

- une unité de sous-échantillonnage (12) configurée pour sous-échantillonner, en un signal (IDS) à une première résolution, un signal (IO) à une seconde résolution supérieure à la première résolution ;
- une unité de codage (14) configurée pour coder le signal (IDS) à la première résolution de manière à obtenir des premières données (B1) ;
- une unité de décodage (16) configurée pour obtenir un signal décodé (IDSdec) à la première résolution par décodage des premières données (B1) ;
- une unité de suréchantillonnage (18) configurée pour suréchantillonner le signal décodé (IDSdec), respectivement transformé par conversion colorimétrique ou non, de manière à obtenir un signal intermédiaire (B) à la seconde résolution ;
- une unité d'apprentissage configurée pour déterminer une pluralité de poids (W) qui minimisent un critère impliquant une distance entre le signal à la seconde résolution (IO), respectivement transformé par conversion colorimétrique ou non, et un signal (C) produit par filtrage du signal intermédiaire (B) en utilisant au moins une convolution au moyen d'une matrice de convolution dont certains au moins des coefficients sont respectivement les poids de la pluralité de poids ;

dans lequel l'unité de codage (14) est configurée pour coder les poids déterminés (W) de manière à obtenir des deuxièmes données (B2).

22. Flux de données représentatives d'un contenu sonore ou visuel, comprenant des premières données (B1) représentatives d'un signal à une première résolution et des deuxièmes données (B2) représentant des poids utilisables en tant que coefficients d'une matrice de convolution utile au filtrage d'un signal à une seconde résolution obtenu par suréchantillonnage du signal à la première résolution.

23. Flux de données selon la revendication 22, comprenant des troisièmes données (B3) indicatives d'une localisation desdits poids au sein de la matrice de convolution.

# Fig.1

# Fig.2

Fig.3

| $a_1$ | $a_2$ | $a_3$ |
|-------|-------|-------|
| $a_4$ | $a_5$ | $a_6$ |
| $a_7$ | $a_8$ | $a_9$ |

Fig.4

| $a_1$ | 0 | $a_2$ |
|-------|-------|-------|
| 0 | $a_3$ | 0 |
| $a_4$ | 0 | $a_5$ |

Fig.5

| $a_1$ | 0 | 0 | 0 | $a_2$ |
|-------|---|---|---|-------|
| 0 | 0 | 0 | 0 | 0 |
| 0 | 0 | $a_3$ | 0 | 0 |
| 0 | 0 | 0 | 0 | 0 |
| $a_4$ | 0 | 0 | 0 | $a_5$ |

Fig.6

| 0 | $a_1$ | 0 |
|-------|-------|-------|
| $a_2$ | $a_3$ | $a_4$ |
| 0 | $a_5$ | 0 |

Fig.7

| $a_1$ | 0 | 0 | 0 | $a_2$ |
|-------|-------|-------|-------|-------|
| 0 | $a_3$ | 0 | $a_4$ | 0 |
| 0 | 0 | $a_5$ | 0 | 0 |
| 0 | $a_6$ | 0 | $a_7$ | 0 |
| $a_8$ | 0 | 0 | 0 | $a_9$ |

Europäisches
Patentamt

European
Patent Office

Office européen
des brevets

**RAPPORT DE RECHERCHE EUROPEENNE**

Numéro de la demande

EP 25 22 1739

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 149 158 A1 (ORANGE [FR]) 29 novembre 2024 (2024-11-29) | 1,2,6-23 | INV. H04N19/59 |
| Y | * page 3 - page 27; revendications 1-15 * ----- | 3-5 | G06T3/4046 H04N19/80 |
| X | US 2023/353764 A1 (IKONIN SERGEY YURIEVICH [RU] ET AL) 2 novembre 2023 (2023-11-02) | 1,17, 20-22 | |
| Y | * page 45 - page 76; revendications 1-25 * ----- | 3-5 | |
| A | Fisher Yu ET AL: "Multi-Scale Context Aggregation by Dilated Convolutions", , 23 novembre 2015 (2015-11-23), XP055557909, Extrait de l'Internet: URL:https://arxiv.org/pdf/1511.07122.pdf * le document en entier * ----- | 1-23 | |

**DOMAINES TECHNIQUES RECHERCHES (IPC)**

H04N
G06T

Le présent rapport a été établi pour toutes les revendications

| Lieu de la recherche | Date d'achèvement de la recherche | Examinateur |
|---|---|---|
| Munich | 28 avril 2026 | Giuliani, Nicola |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 22 1739

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-04-2026

| Document brevet cité au rapport de recherche | | Date de publication | Membre(s) de la famille de brevet(s) | | Date de publication |
|---|---|---|---|---|---|
| FR 3149158 | A1 | 29-11-2024 | CN | 121488467 A | 06-02-2026 |
| | | | EP | 4721399 A1 | 08-04-2026 |
| | | | FR | 3149158 A1 | 29-11-2024 |
| | | | KR | 20260015869 A | 03-02-2026 |
| | | | WO | 2024240496 A1 | 28-11-2024 |
| US 2023353764 | A1 | 02-11-2023 | CN | 116648716 A | 25-08-2023 |
| | | | EP | 4211899 A1 | 19-07-2023 |
| | | | KR | 20230070492 A | 23-05-2023 |
| | | | US | 2023353764 A1 | 02-11-2023 |
| | | | WO | 2022139616 A1 | 30-06-2022 |

EPO FORM P0460

Pour tout renseignement concernant cette annexe : voir Journal Officiel de l'Office européen des brevets, No.12/82

**EP 4 770 093 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BEE LIM et al.** Enhanced Deep Residual Networks for Single Image Super-Resolution. *Computer Vision and Pattern Recognition*, 2017